# EUROPEAN PATENT APPLICATION

(11) **EP 4 750 020 A1**
(43) Date of publication of application: **27.05.2026**
(21) Application number: 24845211.2
(22) Date of filing: 06.06.2024
(51) Int. Cl.: H04L 43/08, H04L 41/06, H04L 43/02, H04L 43/16

(54) **INFORMATION PROCESSING DEVICE AND ALERT NOTIFICATION METHOD**

(30) Priority: 21.07.2023 JP 2023119091
(71) Applicant: Panasonic Holdings Corporation, Kadoma-shi, Osaka 571-8501 (JP)
(72) Inventor: KOGA, Hisao, Kadoma-shi, Osaka 571-0057 (JP); MATSUO, Kotaro, Singapore 469332 (SG)
(74) Representative: Eisenführ Speiser
(86) International application number: PCT/JP2024/020615
(87) International publication number: WO 2025/022829

(57) **Abstract**

An information processing apparatus includes: a first acquirer that acquires topology information including information indicating a connection destination communication apparatus of a communication apparatus constituting a network; a second acquirer that acquires a condition for notifying an alert indicating that the communication apparatus or the network is in a specific state, and a notification destination of the alert; a determiner that determines whether the topology information is applicable to the condition; and a notifier that transmits the alert to the notification destination when the topology information is applicable to the condition.

## Description

### Technical Field

The present disclosure relates to an information processing apparatus and an alert notification method.

### Background Art

Conventionally, multi-hop communication in power line communication (PLC) is known. In this multi-hop communication, a communication network (hereinafter, also simply referred to as a network (NW)), in a plurality of communication terminals, a communication signal is relayed between communication terminals, thereby, performing communication between a terminal and another terminal which cannot directly communicate with the terminal.

In such a communication network, there is a technique for detecting a slave unit that causes communication failure based on a communication quality of a transmission path (e.g., see Patent Literature (hereinafter, also referred to as "PTL") 1).

PTL 1 discloses a technique in which a center apparatus has a communication status table that holds a reception level, a transmission level, and a number of retransmissions of the same message for each slave unit, monitors the reception level, the transmission level, and the number of retransmissions of the same message for each slave unit, and determines that a slave unit that has been in a state that matches a predetermined threshold value condition (e.g., the reception level or the transmission level is less than the threshold value, or the number of transmissions of the same message is equal to or larger than the threshold value) for a predetermined period of time continuously is causing communication failure.

### Citation List

### Patent Literature

PTL 1
Japanese Patent Application Laid-Open No. 2019-54324

### Summary of Invention

In the technique disclosed in PTL 1, a slave unit that matches a fixed condition of "causing communication failure" is specified. However, a mechanism that can specify a communication network or a communication terminal in a certain state by flexibly setting a condition instead of such a fixed condition is desired.

One non-limiting and exemplary embodiment of the present disclosure facilitates providing an information processing apparatus and an alert notification method each capable of appropriately specifying and notifying that a communication network or a communication terminal constituting the communication network is in a specific state.

An information processing apparatus according to one exemplary embodiment of the present disclosure includes: a first acquirer that acquires topology information including information indicating a connection destination communication apparatus of a communication apparatus constituting a network; a second acquirer that acquires a condition for notifying an alert indicating that the communication apparatus or the network is in a specific state, and a notification destination of the alert; a determiner that determines whether the topology information is applicable to the condition; and a notifier that transmits the alert to the notification destination when the topology information is applicable to the condition.

An alert notification method according to one exemplary embodiment of the present disclosure includes: acquiring, by an information processing apparatus, topology information including information indicating a connection destination communication apparatus of a communication apparatus constituting a network; acquiring, by the information processing apparatus, a condition for notifying an alert indicating that the communication apparatus or the network is in a specific state, and a notification destination of the alert; determining, by the information processing apparatus, whether the topology information is applicable to the condition; and transmitting, by the information processing apparatus, the alert to the notification destination, when the topology information is applicable to the condition.

**It** should be noted that general or specific embodiments may be implemented as a system, an apparatus, a method, an integrated circuit, a computer program, a storage medium, or any selective combination thereof.

According to one embodiment of the present disclosure, it is possible to appropriately specify and notify that a communication network or a communication terminal constituting the communication network is in a specific state.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a block diagram illustrating an example of a remote monitoring system according to an embodiment of the present disclosure;
FIG. 2 is a block diagram illustrating a hardware configuration example of a terminal according to the embodiment of the present disclosure;
FIG. 3 is a block diagram illustrating a functional configuration example of a CPU of the terminal according to the embodiment of the present disclosure;
FIG. 4 is a block diagram illustrating a hardware configuration example of a management server according to the embodiment of the present disclosure;
FIG. 5 is a block diagram illustrating a functional configuration example of a CPU of the management server according to the embodiment of the present disclosure;
FIG. 6 is a diagram illustrating an example of a setting screen including information on statistical information of a transmission path quality and an alert notification condition;
FIG. 7A is a diagram illustrating an example of a topology change;
FIG. 7B is a diagram illustrating another example of the topology change;
FIG. 7C is a diagram illustrating still another example of the topology change;
FIG. 7D is a diagram illustrating still another example of the topology change;
FIG. 8 is a diagram illustrating an operation example of a terminal that is a slave unit;
FIG. 9 is a diagram illustrating an operation example of a terminal that is a base unit;
FIG. 10 is a diagram illustrating an operation example of the management server;
FIG. 11 is a diagram illustrating another operation example of the management server;
FIG. 12 is a diagram illustrating another operation example of the management server;
FIG. 13 is a diagram illustrating another operation example of the management server;
FIG. 14 is a diagram illustrating still another operation example of the management server; and
FIG. 15 is a diagram illustrating an example of NW information accumulated and stored in the management server.

### Description of Embodiments

Hereinafter, embodiments of the present disclosure will be described in detail with reference to the accompanying drawings as appropriate. However, a detailed description more than necessary may be omitted, such as a detailed description of an already well-known matter and a duplicated description for a substantially identical configuration, to avoid the following description becoming unnecessarily redundant and to facilitate understanding by those skilled in the art.

Note that, the accompanying drawings and the following description are provided for those skilled in the art to sufficiently understand the present disclosure and are not intended to limit the subject matter described in the claims.

### (Embodiment)

### <Configuration of Remote Monitoring System>

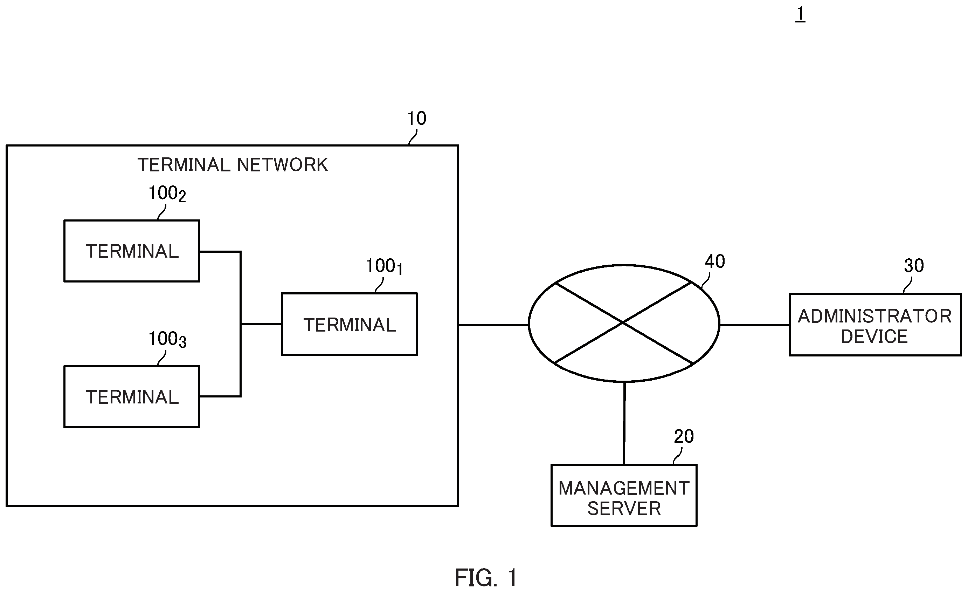

FIG. 1 is a block diagram illustrating an example of a remote monitoring system according to an embodiment of the present disclosure. As illustrated in FIG. 1, remote monitoring system 1 includes terminal network 10 (communication network, network), management server 20, administrator device 30, and network 40. Terminal network 10, management server 20, and administrator device 30 are communicably connected to each other via network 40. Network 40 may be a local area network (LAN), the Internet, a virtual private network (VPN), a mobile communication network, or a combination thereof.

Terminal network 10 may constitute a communication system. Such a communication system may be, for example, a PLC system. The communication system and the communication network are interchangeable.

Terminal network 10 may be configured of, for example, a plurality of terminals (e.g., terminals 100₁ to 100₃ illustrated in the drawing). However, the number of terminals constituting terminal network 10 is not limited to three and may be any number (however, in some cases, a maximum number may be defined depending on the network). Hereinafter, in a case where it is not necessary to distinguish between terminals 100₁ to 100₃ and the like, these terminals will be referred to as terminal 100. The plurality of terminals 100 may include a base unit and a slave unit. In the example illustrated in the drawing, the base unit may be terminal 100₁, and the slave units may be terminals 100₂ and 100₃. The base unit (terminal 100₁) is configured to be connectable to management server 20 (information processing apparatus) via network 40.

Each of terminals 100 that are the slave units (that is, terminals other than base unit) transmits information indicating a network topology of terminal 100 itself (hereinafter, also referred to as topology information) and a transmission path quality (hereinafter, also referred to as a transmission path state) of a transmission path (route) on which terminal 100 itself communicates to the base unit (e.g., periodically).

Terminal 100 that is a base unit integrates or aggregates the information indicating the network topology of terminal 100 itself and the transmission path quality of the transmission path on which terminal 100 itself communicates, and the information indicating the network topology and the transmission path quality transmitted from each of terminals 100 that are the slave units, and transmits these to management server 20 (e.g., periodically). Hereinafter, the information indicating the network topology of terminal 100 and the transmission path quality of the transmission path on which terminal 100 communicates may be referred to as information of a terminal network (NW), terminal NW information, NW information, and the like.

These base units and slave units may be collectively referred to as a communication terminal or simply a terminal, a communication node or simply a node, a communication apparatus or simply an apparatus, a communication apparatus or simply an apparatus, a communication terminal or simply a terminal, and the like. Further, the base unit may be referred to as a master terminal, a base terminal, a master, a route, a route terminal, and the like, and the slave unit may be referred to as an end terminal, a slave terminal, a terminal, and the like.

In terminal network 10, each terminal performs multi-hop communication, using PLC that uses a power line as a communication line and superimposes a signal on the power line.

In the multi-hop communication, for example, a plurality of terminals is connected in the system, and a relay transmission network is built up to a specified number (also referred to as a hop count) with the base unit at the top. In the system, a relay terminal is automatically selected according to the transmission path state between mutual terminals, and communication data is relayed between the base unit and the slave unit. As described above, in the multi-hop communication system, a multi-hop (or a topology) is formed, and the multi-hop communication is performed.

In the multi-hop communication system, each terminal evaluates a communication quality with an adjacent terminal (or a nearby terminal), and an appropriate relay path is configured by the base unit after the communication quality evaluation. Then, a unicast (UC) frame is relayed according to the relay path configured by the base unit. Further, regarding the broadcast frame, the target frame is delivered to all terminals. Therefore, the broadcast frame transmitted from a certain terminal is received by all of the base unit and the relay terminals, and these terminals re-broadcast and transmit the target frame to other terminals.

Management server 20 may be, for example, a cloud server installed in a cloud environment. Management server 20 is configured to be connectable to a base unit (e.g., terminal 100₁) in terminal network 10 and administrator device 30 via network 40.

Management server 20 collects the NW information transmitted by a base unit and stores the collected NW information (e.g., in a storage apparatus included in management server 20). The stored NW information will be described below.

Management server 20 transmits information on the statistical information of the NW information including the transmission path quality of terminal 100 that communicates and the alert notification condition to administrator device 30 and displays (controls) a setting screen including these on a display unit (display) included in administrator device 30.

Management server 20 receives information indicating the alert notification condition and the notification destination from administrator device 30 and stores the received information indicating the alert notification condition and the notification destination, thereby registering the received information indicating the alert notification condition and the notification destination.

Management server 20 determines whether the NW information of terminal 100 thus registered is applicable to the alert notification condition. In other words, management server 20 determines whether the alert notification condition is satisfied, based on the NW information of terminal 100 thus registered. In a case where the NW information of terminal 100 is applicable to the alert notification condition, management server 20 transmits an alert to the alert notification destination by e-mail, thereby, notifying the administrator of the alert.

Administrator device 30 is a device used by an administrator who manages remote monitoring system 1 or terminal network 10. Administrator device 30 may be referred to as a device associated with the administrator of remote monitoring system 1 or terminal network 10. Administrator device 30 may be a device such as a personal computer (PC) or a tablet.

Administrator device 30 receives the information on the statistical information of the NW information the alert notification condition transmitted by management server 20 and displays a setting screen including these. The information on the statistical information of the NW information and the alert notification condition thus displayed will be described below.

Administrator device 30 receives information indicating the alert notification condition and the notification destination input by the administrator on the displayed setting screen and transmits these pieces of information to management server 20.

Administrator device 30 receives and displays the alert transmitted by management server 20.

Note that, in the following, the term "frame" may be appropriately replaced with terms such as "packet", "message," "signal," and the like.

### <Configuration of Terminal>

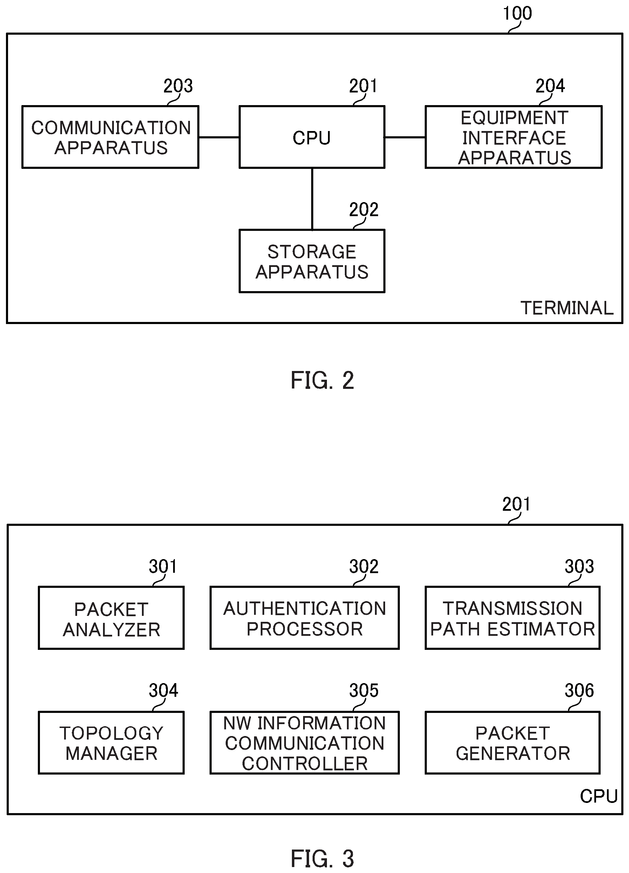

FIG. 2 is a block diagram illustrating a hardware configuration example of terminal 100 according to the present embodiment.

For example, a base unit and a slave unit in terminal network 10 may have the configuration of terminal 100 illustrated in FIG. 1.

As illustrated in FIG. 2, terminal 100 includes central processing unit (CPU) 201, storage apparatus 202, communication apparatus 203, and equipment interface apparatus 204. Terminal 100 may include components other than those described above.

CPU 201 controls the overall operation of terminal 100. CPU 201 realizes various functions of terminal 100 (including the processing described later) by, for example, loading a predetermined program stored in an hard disk drive (HDD), a solid state drive (SSD), or the like included in storage apparatus 202 into a random access memory (RAM) or the like included in storage apparatus 202 and executing the program. The program executed by CPU 201 may be stored in advance in storage apparatus 202, or may be provided through an electrical communication line such as the Internet or stored in a non-transitory storage medium such as a memory card.

Storage apparatus 202 is a non-transitory storage medium, and includes a non-volatile memory such as an HDD, an SSD, or a read only memory (ROM), an electrically rewritable non-volatile memory such as an electrically erasable programmable read only memory (EEPROM), a volatile memory such as a RAM, and the like. Storage apparatus 202 stores information on a communication path, topology information, a communicable terminal (e.g., another terminal which can be directly communicated), and the like (e.g., in a table format). Storage apparatus 202 also stores programs such as control programs for operating terminal 100, data necessary for executing these programs, identification information of terminal 100, and other information/data processed by terminal 100 (e.g., CPU 201).

In a case where terminal 100 is a base unit, for example, a communication path data table for registering all communication paths between the terminals built in the network, a topology table for recording information (link information) on an adjacent terminal with which each terminal is directly communicable, and the like are stored in storage apparatus 202.

Further, in a case where terminal 100 is a slave unit, for example, information on a terminal (e.g., adjacent terminal) with which terminal 100 is communicable, information on a communication quality between terminal 100 and the adjacent terminal, and the like are stored in storage apparatus 202.

Communication apparatus 203 is a communication interface apparatus for communicating with other terminals 100. Communication apparatus 203 may be a communication interface apparatus for PLC.

Equipment interface apparatus 204 is an interface apparatus for exchanging (inputting and outputting) data with a control apparatus or electronic equipment connected to terminal 100. Equipment interface apparatus 204 may be, for example, a communication interface apparatus that conforms to the Ethernet (registered trademark) standard.

The hardware configuration of terminal 100 described above is merely an example, and terminal 100 according to the present disclosure may be implemented by another appropriate hardware configuration.

FIG. 3 is a diagram illustrating a functional configuration example of CPU 201 according to the present embodiment.

CPU 201 includes packet analyzer 301, authentication processor 302, transmission path estimator 303, topology manager 304, NW information communication controller 305, and packet generator 306.

At least one of a hello packet (H packet) (may be referred to as a hello message or a hello signal), an authentication packet, a packet for synchronization, a packet for transmission path estimation, and a normal packet may be input to CPU 201. The H packet is broadcast from one terminal to a connected terminal prior to the authentication processing performed in the communication system (communication network). Further, in addition to the above, the H packet is periodically transmitted or broadcast to an adjacent terminal by each terminal to update the path information (such an H packet may be referred to as a periodic signal). The H packet may mean a packet that indicates the presence of the terminal itself. For example, the H packet includes identification information of a base unit in the network, information on a transmission source of the H packet, information on an adjacent terminal of the terminal itself, information on a communication quality of a link, and the like. The authentication packet is a packet transmitted and received during the authentication processing, the packet for synchronization is a packet used for time synchronization, such as a Sync packet or a Follow-Up packet, and the normal packet may be, for example, sensor data acquired by a sensor. Further, the packet for transmission path estimation is a packet used for estimating the transmission path and may include a known signal (e.g., reference signal or pilot signal) on both terminals of a transmission and reception side.

Packet analyzer 301 analyzes a data structure of various packets (H packet, authentication packet, packet for synchronization, packet for transmission path estimation, and normal packet) to be input, determines a type of packet and distributes a transfer destination of the packet based on the determination result. For example, when determining that the input packet is the packet for transmission path estimation, packet analyzer 301 outputs the packet for transmission path estimation to transmission path estimator 303. Further, for example, when determining that the input packet is the authentication packet, packet analyzer 301 outputs the authentication packet to authentication processor 302. For example, when determining that the input packet is the normal packet, packet analyzer 301 outputs the normal packet to topology manager 304.

Authentication processor 302 executes authentication processing with a terminal, which is a transmission source of the authentication packet, using the authentication packet inputted from packet analyzer 301. Authentication processor 302 outputs an authentication packet, which is a packet generated during the authentication processing, or a response to an authentication packet transmitted from another terminal, to topology manager 304.

Transmission path estimator 303 performs transmission path estimation (channel estimation (CE)) between the terminal of the transmission source of the packet and the terminal itself, using the packet for transmission path estimation input from packet analyzer 301. Transmission path estimator 303 calculates a physical (PHY) speed of the transmission path as the transmission path estimation result. Alternatively, transmission path estimator 303 may calculate a carrier to interference and noise ratio (CINR) characteristic, a noise characteristic, or the like as the transmission path estimation result. Transmission path estimator 303 outputs the transmission path estimation result to NW information communication controller 305.

Topology manager 304 manages (acquires or calculates) the topology information indicating the topology (i.e., terminal constituting the communication system and the connection form thereof) and generated by the base unit and distributes and outputs the output destination (e.g., packet generator 306) of various packets based on the topology information. The topology information is stored in topology manager 304 or storage apparatus 202 of each terminal. Further, topology manager 304 stores not only the topology information but also information on the communication path described above, a terminal capable of communication (e.g., another terminal capable of direct communication), the terminal itself, and the like in topology manager 304 or storage apparatus 202. Topology manager 304 of the base unit generates (forms) the topology based on the H packet transmitted from each of one or more terminals that are the targets of the authentication processing and provides the topology information indicating the topology to other terminals.

NW information communication controller 305 outputs, to packet generator 306, as the NW information of terminal 100, information indicating terminal 100 that is a communication counterpart (connection destination) and related information (topology information) and the transmission path estimation result (transmission path quality) of the transmission path with terminal 100 that is the communication counterpart, based on the topology information and the like stored in topology manager 304 or storage apparatus 202 and the transmission path estimation result. NW information communication controller 305 transmits the NW information to terminal 100 that is the base unit from packet generator 306, for example, periodically (e.g., every 5 seconds, every 30 seconds, or every 1 minute). The NW information transmitted from terminal 100 positioned lower in the multi-hop network is relayed to terminal 100 positioned higher, and is finally transmitted to terminal 100 that is the base unit.

Packet generator 306 generates and outputs a packet for data communication to another terminal that is a transmission destination, an H packet, or the like based on the authentication packet or the normal packet input from topology manager 304 or the information input from NW information communication controller 305.

### <Configuration of Management Server>

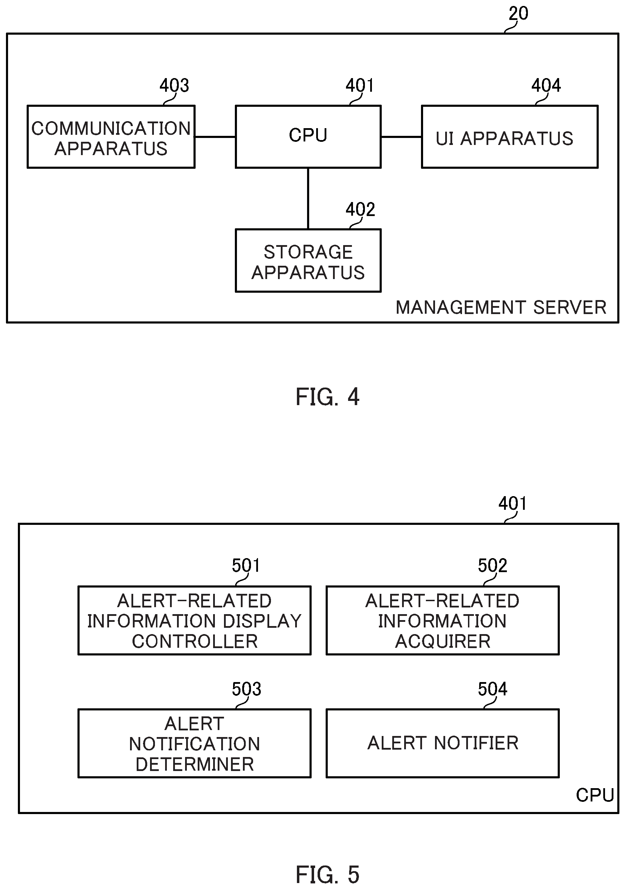

FIG. 4 is a block diagram illustrating a hardware configuration example of management server 20 according to the present embodiment. Management server 20 may be implemented by a calculation apparatus (computer, calculator) or an information processing apparatus, such as a server apparatus.

For example, as illustrated in FIG. 4, management server 20 may include CPU 401, storage apparatus 402, communication apparatus 403, and user interface (UI) apparatus 404.

A program or an instruction for realizing the functions and the processing of management server 20 described above and described below may be downloaded from any external apparatus (e.g., server) via a network or the like. Further, such a program or instruction may be provided from a removable storage medium, such as a CD-ROM or flash memory.

CPU 401 executes the functions and the processing of management server 20 described above or described below, in accordance with the program or instruction stored in storage apparatus 402, data such as a parameter used to execute the program or instruction, and the like.

Storage apparatus 402 is implemented by a RAM, flash memory, hard disk drive, or the like, and stores a file, data, or the like used to execute a program or instruction, together with the installed program or instruction. Storage apparatus 402 may include a non-transitory storage medium.

Storage apparatus 402 stores all the NW information collected from terminal 100 that is the base unit. Further, storage apparatus 402 stores the alert notification condition and the notification destination.

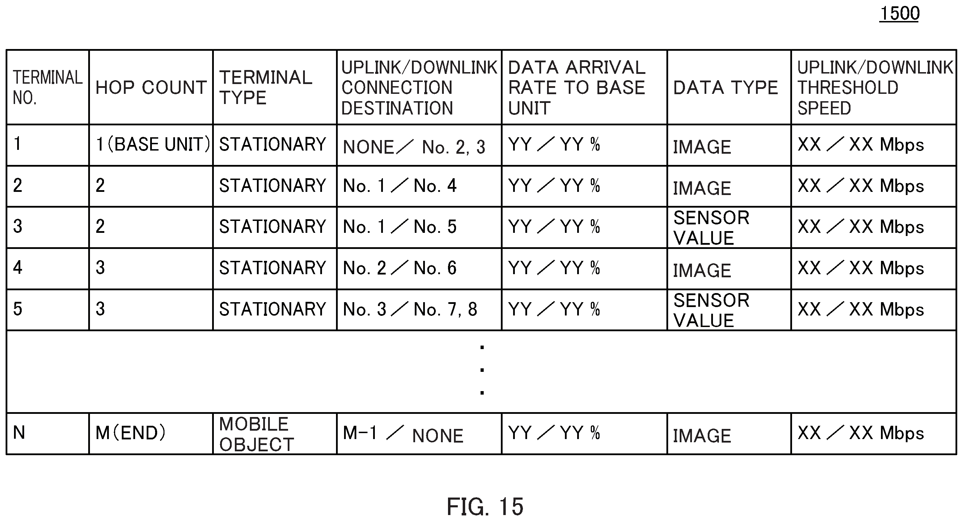

FIG. 15 is a diagram illustrating an example of the NW information accumulated and stored in the management server. For example, the NW information is stored in data table 1500 stored in storage apparatus 402 provided in management server 20.

As illustrated in FIG. 15, the NW information may include a hop count (or the number of hops) of terminal 100, a terminal type, an uplink/downlink connection destination, a data arrival rate to the base unit, a data type, and an uplink/downlink threshold speed. Here, the uplink may mean a direction from terminal 100 (large hop count) positioned lower in the multi-hop network to a terminal (small hop count) positioned higher, and the downlink may mean a direction from terminal 100 positioned higher to terminal 100 positioned lower in the multi-hop network.

The hop count represents the number of times of relaying from terminal 100 that is the base unit to terminal 100, and in the present embodiment, the hop count of the base unit is set to 1.

The apparatus type represents whether terminal 100 is stationary (fixed type) or mobile.

The uplink/downlink connection destination represents connection destination terminal 100 on the upper side of terminal 100 and/or connection destination terminal 100 on the lower side of terminal 100.

The data arrival rate to the base unit represents the uplink data arrival rate and the downlink data arrival rate with the base unit during a predetermined period.

The data type represents a type of data (a control signal, image, sensor value, and the like) acquired by terminal 100. The data type herein may be a type of data that is typically acquired by terminal 100. That is, even in a case where the data type is "image", terminal 100 may acquire other data (a control signal, sensor value, and the like).

The uplink/downlink threshold speed is one of the alert notification conditions and may be automatically determined by the base unit or management server 20 according to the type of data flowing through terminal network 10. For example, the uplink/downlink threshold speed for a data type (e.g., image) having a relatively large amount of data may be set to a higher value than the uplink/downlink threshold speed in for a data type (e.g., sensor value) having a relatively small amount of data. Alternatively, the opposite may be applied. Further, the uplink/downlink threshold speed may be automatically determined by the base unit or management server 20 according to the hop count of terminal 100. For example, the uplink/downlink threshold speed having a higher value may be set for a terminal having a small hop count (i.e., terminal positioned higher) than a terminal having a large hop count (that is, a terminal positioned lower). Alternatively, the opposite may be applied. Further, the uplink/downlink threshold speed may be automatically determined by the base unit or management server 20 according to the apparatus type of terminal 100. For example, the uplink/downlink threshold speed having a higher value may be set for a stationary type terminal than a mobile type terminal. Alternatively, the opposite may be applied. Further, the uplink/downlink threshold speed may be changed by the administrator (e.g., via a setting screen described below). The uplink/downlink threshold speed may be stored in a data table for the alert notification condition instead of being stored as the NW information.

Further, although not illustrated, data table 1500 stores the transmission path quality (physical speed or the like) of the transmission path on which terminal 100 communicates.

Communication apparatus 403 may be implemented by various communication circuits that execute communication processing with an external apparatus or communication networks, such as the Internet, a LAN, a VPN, or the like.

UI apparatus 404 may be configured by an input apparatus, such as a keyboard, mouse, camera, and microphone, output apparatus, such as a display, speaker, headset and printer, and an input/output apparatus, such as a haptic device and touch screen, and realizes an interface between the user and management server 20. For example, the user operates a GUI displayed on the display or touch screen, using the keyboard, mouse, or the like to operate management server 20.

The hardware configuration of management server 20 described above is merely an example, and management server 20 according to the present disclosure may be implemented by another appropriate hardware configuration.

FIG. 5 is a block diagram illustrating a functional configuration example of CPU 401 according to the present embodiment.

CPU 401 includes alert-related information display controller 501 (corresponding to a "display controller"), alert-related information acquirer 502 (corresponding to a "first acquirer" and a "second acquirer"), alert notification determiner 503 (corresponding to a "determiner"), and alert notifier 504 (corresponding to a "notifier").

Alert-related information display controller 501 transmits the information on the statistical information of the NW information of terminal 100 and the alert notification condition to administrator device 30 via communication apparatus 403 and displays (controls) a setting screen including these on a display unit (display) included in administrator device 30.

Alert-related information acquirer 502 receives, via communication apparatus 403, information indicating the alert notification condition, which is a condition for notifying the alert indicating that terminal 100 or terminal network 10 is in a specific state (an abnormal state, unstable state, state of being near some equipment, or the like), and the alert notification destination, which is the notification destination of the alert, from administrator device 30, thereby acquiring the information indicating the alert notification condition and the notification destination. Alert-related information acquirer 502 stores the acquired information indicating the alert notification condition and the notification destination in storage apparatus 402, thereby registering the information indicating the alert notification condition and the notification destination.

Alert-related information acquirer 502 receives all the NW information from terminal 100 that is the base unit via communication apparatus 403, thereby acquiring all the received NW information. Alert-related information acquirer 502 stores all the acquired NW information in storage apparatus 402, thereby registering all the NW information. When receiving (acquiring) all the NW information, alert-related information acquirer 502 outputs the fact to alert notification determiner 503.

Alert notification determiner 503 determines whether the NW information of terminal 100 thus registered is applicable to the alert notification condition. In other words, alert notification determiner 503 determines whether the alert notification condition is satisfied based on the NW information of terminal 100 thus registered. In a case where the NW information of terminal 100 is applicable to the alert notification condition, alert notification determiner 503 determines to notify terminal 100 of the alert, and in a case where the NW information of terminal 100 is not applicable to the alert notification condition, alert notification determiner 503 determines not to notify terminal 100 of the alert. Alert notification determiner 503 outputs the result of the determination to alert notifier 504.

When performing the alert notification determination based on a topology change, alert notification determiner 503 may perform the alert notification determination at a timing when alert-related information acquirer 502 receives (acquires) the topology information (NW information) from terminal 100 that is the base unit.

When performing the alert notification determination based on the transmission path quality, alert notification determiner 503 may perform the alert notification determination at a timing when alert-related information acquirer 502 receives (acquires) the transmission path quality (NW information) from terminal 100 that is the base unit.

Alert notifier 504 receives the determination result output from alert notification determiner 503 as an input, and in a case where the received determination result is to notify terminal 100 of the alert, alert notifier 504 transmits the alert to the alert notification destination by e-mail via communication apparatus 403 to notify the administrator of the alert.

### <Configuration of Administrator Device>

Although not illustrated, administrator device 30 may have the same hardware configuration as management server 20.

Administrator device 30 receives the information on the statistical information of the NW information of terminal 100 and the alert notification condition transmitted by management server 20 and displays a setting screen including these on a display unit (display) included in administrator device 30.

Administrator device 30 receives the input (information indicating the alert notification condition and the notification destination) from the administrator on the setting screen displayed on the display and transmits the information indicating the alert notification condition and the notification destination thus received to management server 20.

### <Statistical Information and Alert Notification Condition>

Next, the information on the statistical information of the transmission path quality and the alert notification condition displayed on the display of administrator device 30 will be described.

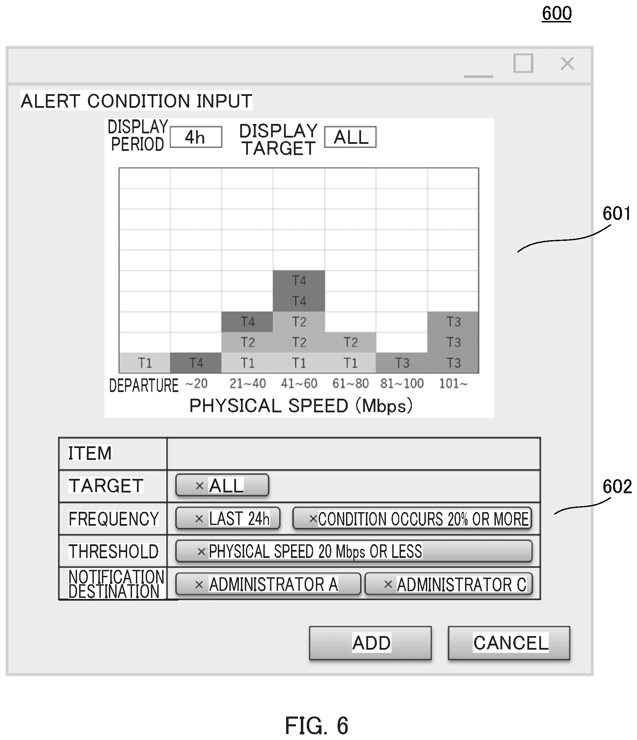

FIG. 6 is a diagram illustrating an example of a setting screen related to the statistical information of the transmission path quality (NW information) and the alert notification condition displayed on the display of administrator device 30. Setting screen 600 illustrated in FIG. 6 is controlled by alert-related information display controller 501 to be displayed on the display of administrator device 30.

Setting screen 600 includes statistical information region 601 and condition region 602.

The statistical information of the NW information of terminal 100 accumulated and stored in management server 20 is displayed in statistical information region 601.

For example, as illustrated in FIG. 6, a frequency distribution of the physical speed may be displayed as the statistical information of the NW information. The "display period" illustrated in FIG. 6 represents a target display period immediately before the physical speed displayed in statistical information region 601, and the "display target" illustrated in FIG. 6 represents a display target terminal for which the physical speed displayed in statistical information region 601 is calculated. In the example illustrated in the drawing, the display period is the previous four hours, and the display target is all terminals 100 in terminal network 10. Each of "T1" to "T4" represents terminal 100, and each of rectangles surrounding "T1" to "T4" represents an average physical speed over one hour. Therefore, in the example illustrated in the drawing, four rectangles for four hours are present for each of "T1" to "T4".

The information on the alert notification condition is displayed in condition region 602.

For example, as illustrated in FIG. 6, items of "target", "frequency", "threshold value", and "notification destination" may be displayed and set as the alert notification condition. The administrator can set the items illustrated in FIG. 6 (by selection, character input, or the like) using the input apparatus included in administrator device 30. For example, the "target" illustrated in FIG. 6 represents a target terminal for which the alert notification is performed. For example, the "frequency" illustrated in FIG. 6 represents when in the future, and how often the condition related to the "threshold value" illustrated in FIG. 6 occurs, the alert notification is performed. For example, the "threshold value" illustrated in FIG. 6 represents one or more values to be compared with the transmission path quality, and the alert is notified according to a size relationship or an inclusion relationship between the transmission path quality and the value (group). For example, the "notification destination" illustrated in FIG. 6 represents a destination to which the alert notification is transmitted. The notification destinations ("administrator A", "administrator C") illustrated in FIG. 6 are associated with e-mail addresses, and in practice, the alert notification is transmitted to the e-mail addresses.

Further, for the alert notification based on the transmission path quality, the administrator may set an upper limit and a lower limit of the transmission path quality (e.g., physical speed), a fluctuation allowable period, or the like as the alert notification condition ("threshold value"). For example, in a case where the transmission path quality is not within a range defined by the upper limit and the lower limit and/or a fluctuation cycle of the transmission path quality is shorter than the fluctuation allowable period, the fact may be notified as the alert. Further, for example, in a case where the upper limit of the transmission path quality is not set and the lower limit is set to the minimum, the fact that terminal 100 is not recognized (terminal 100 has left terminal network 10 or has disappeared from topology) may be notified as the alert.

Further, for the alert notification based on a topology change, the administrator may set all the topology changes, a ratio of a change in a certain period, an increase or decrease in the number of terminals 100 (that is, new terminal 100 joining terminal network 10 or terminal 100 leaving terminal network 10), or the like as the alert notification condition. In a case where the topology change as described above occurs, the fact may be notified as the alert.

The alert notification condition illustrated in FIG. 6 is merely an example, and other items may be added, or some of the items illustrated in FIG. 6 may be deleted.

As described above, management server 20 displays the past statistical information and the alert condition setting on one screen. As a result, the administrator can input the alert condition while viewing the past statistical information, so that it is possible to easily and appropriately set the alert notification condition. For example, in a case where a large number of alerts are notified, the administrator can avoid the condition under which the alert is frequently notified while viewing the past statistical information, and conversely, in a case where a small number of alerts are notified, the administrator can set the condition under which the alert is more frequently notified while viewing the past statistical information.

### <Use Cases>

Hereinafter, exemplary use cases to which the present disclosure is applied will be described.

### [Use Case 1: Alert Based on Transmission Path Quality]

For example, in a door phone system for a condominium, the alert based on a transmission path quality may be effectively used. For example, in the system, since it is necessary to stream a video of a visitor to a door phone slave unit provided in a facility management room or a residence of a corresponding resident, an alert indicating the fact may be notified to a facility manager or a service man who is the administrator when a state in which the minimum required physical speed (threshold value, lower limit) cannot be ensured occurs. **In** the former case, the service man may be called as a trigger of the alert.

### [Use Case 2: Alert Based on Topology Change]

For example, the alert based on a topology change may be effectively used as a control trigger of an in-building transport robot (e.g., factory) incorporating terminal 100 in a building (e.g., a factory) in which various terminals 100 are disposed. As an example, in a case where the in-building transport robot arrives at a certain point (i.e., in a case where the topology change occurs), the elevator may be moved to the point. The movement of the elevator may be triggered by making the notification of the alert corresponding to the topology change to the administrator or may be triggered by the topology change. As another example, in a case where a plurality of robots are simultaneously operated, in order to avoid a collision at a certain point, another robot may not be allowed to pass through the point until a certain robot passes through the point.

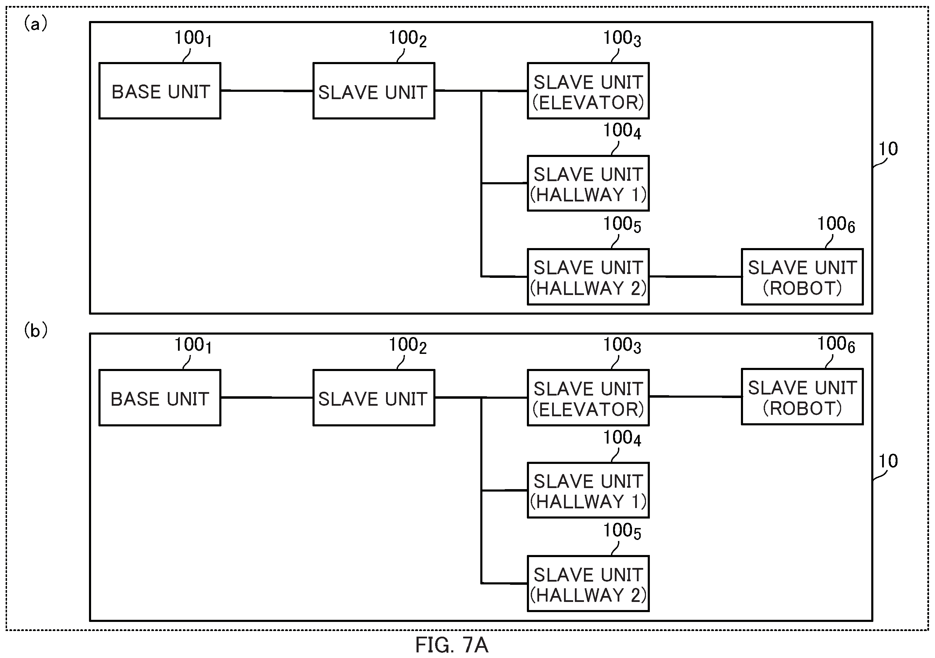

FIG. 7A is a diagram illustrating an example of a topology change in use case 2. In the example illustrated in FIG. 7A, terminal network 10 includes terminal 100₁ that is the base unit and terminals 100₂ to 100₆ that are the slave units, slave unit 100₃ is installed near the elevator, slave units 100₄ and 100₅ are installed in a hallway, and slave unit 100₆ is incorporated into the robot. As illustrated in FIG. 7A (a), at a certain point in time, the topology is that slave unit 100₆ is under slave unit 100₅, but the topology is changed as the robot moves, such as slave unit 100₆ being under slave unit 100₄. As illustrated in FIG. 7A (b), in a case where slave unit 100₆ is under slave unit 100₃ (in a case where the robot arrives at the elevator point, that is, in a case where a predetermined topology change occurs (slave unit 100₆ is connected to specific slave unit 100₃)), the elevator is moved to the elevator point.

### [Use Case 3: Alert Based on Topology Change]

For example, the alert based on a topology change may be effectively used to optimize a water-based multi-hop network in which various terminals 100 are disposed. For example, in a case where a relay drone or the like incorporating terminal 100 is reduced due to a communication failure in a multi-hop network built by using terminal 100 in resource exploration or coastal construction, a standby relay drone or the like incorporating terminal I00 can be automatically moved as a substitute for the relay drone or the like that has failed, as a trigger of the fact.

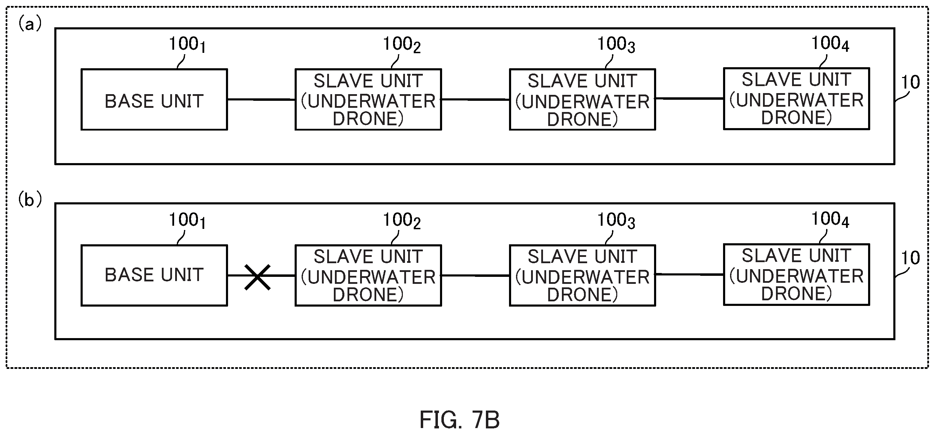

FIG. 7B is a diagram illustrating an example of a topology change in use case 3. In the example illustrated in FIG. 7B, terminal network 10 includes terminal 100₁ that is the base unit and terminals 100₂ to 100₄ that are the slave units, and terminals 100₂ to 100₄ that are slave units are incorporated into the underwater drone. As illustrated in FIG. 7B (a), at a certain point in time, the topology is that slave unit 100₂ is under base unit 100₁, slave unit 100₃ is under slave unit 100₂, and slave unit 100₄ is under slave unit 100₃. After that, as time passes, as illustrated in FIG. 7B (b), due to the failure of slave unit 100₂, the slave unit present below including slave unit 100₂ is not recognized. In a case where the topology change occurs, the standby underwater drone can be directed to the position of slave unit 100₂.

### [Use Case 4: Alert Based on Topology Change]

For example, the alert based on a topology change may be effectively used for abnormality detection of a fixed system device (air conditioner for business use, solar panel, fire alarm, or the like) incorporating terminal 100. For example, in large and fixed equipment with a small fluctuation factor of the transmission path, the departure of terminal 100 from the network may be determined to be abnormal, and an alert indicating the abnormality may be notified to the equipment administrator or the service person who is the administrator, based on the determination. In the former case, the service person may be called as a trigger of the alert.

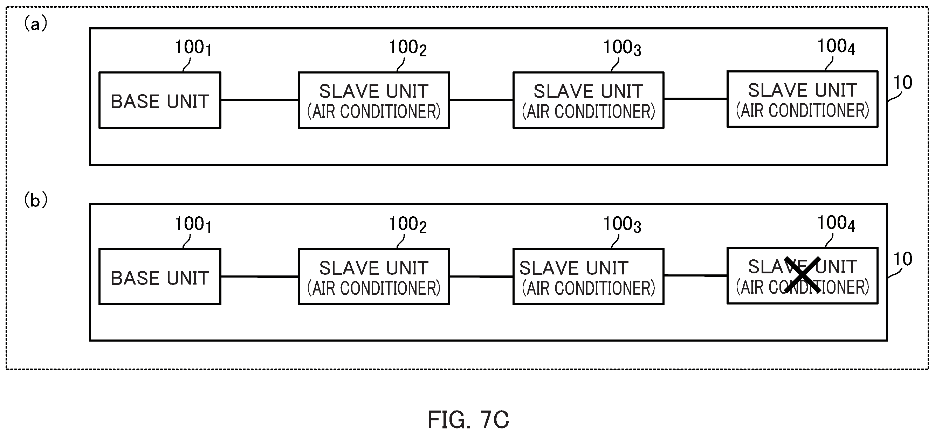

FIG. 7C is a diagram illustrating an example of a topology change in use case 4. In the example illustrated in FIG. 7C, an assumption is made that terminal network 10 includes terminal 100₁ that is the base unit and terminals 100₂ to 100₄ that are the slave units, and terminals 100₂ to 100₄ that are the slave units are incorporated into the air conditioner. As illustrated in FIG. 7C (a), at a certain point in time, the topology is that slave unit 100₂ is under base unit 100₁, slave unit 100₃ is under slave unit 100₂, and slave unit 100₄ is under slave unit 100₃. As described above, the air conditioner or the like that is the introduction equipment introduced during the construction is completely understood during the construction. After that, as time passes, as illustrated in FIG. 7C (b), in a case where a topology change occurs in which slave unit 100₄ that is under slave unit 100₃ is not recognized due to a failure of slave unit 100₄, it is determined that the number of devices is less than the number understood during the construction, and the abnormality is determined, and the service man can be called.

### [Use Case 5: Alert Based on Topology Change]

For example, in terminal network 10 in which various terminals 100 are disposed, the alert based on a topology change may be effectively used in a case where the topology is largely changed or the initial topology and another topology are alternately repeated as compared with the initial topology (e.g., during the construction). In such a case, the cause may be an environmental factor (e.g., an influence of noise) or signs of a device failure. Therefore, in such a case, the alert may be notified to the equipment administrator or the service person who is the administrator. In the former case, the service person may be called as a trigger of the alert.

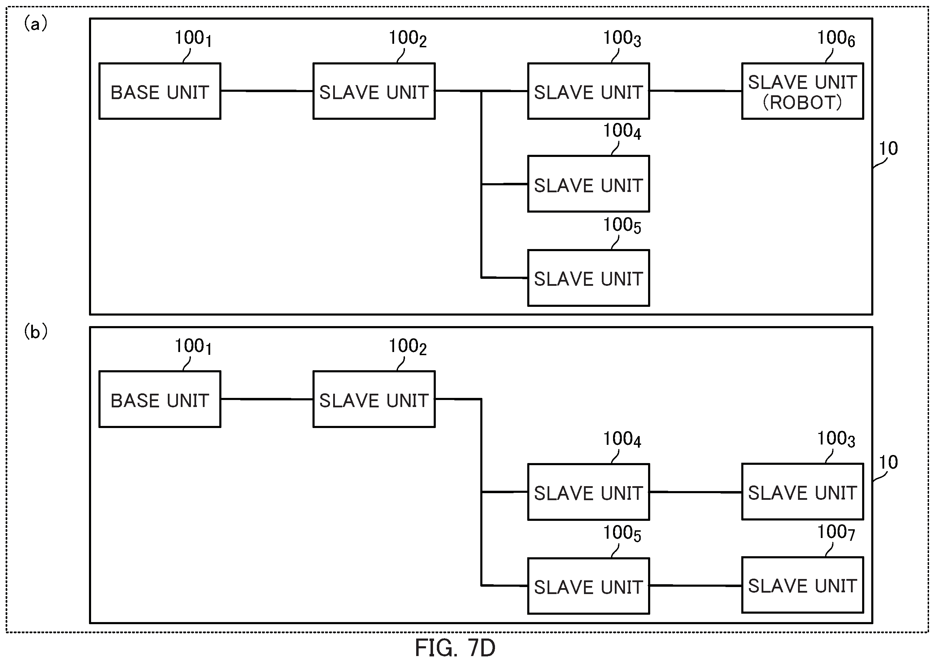

FIG. 7D is a diagram illustrating an example of a topology change in use case 5. In the example illustrated in FIG. 7D, terminal network 10 initially includes terminal 100₁ that is the base unit and terminals 100₂ to 100₆ that are the slave units, and then includes base unit 100₁, slave units 100₂ to 100₅, and terminal 100₇ that is the slave unit. As illustrated in FIG. 7D (a), during the construction, the topology is that the slave unit 100₂ is under base unit 100₁, slave units 100₃, 100₄, and 100₅ are under slave unit 100₂, and slave unit 100₆ is under slave unit 100₂. On the other hand, at a certain point in time, as illustrated in FIG. 7D (b), the topology is changed largely in which slave unit 100₃ is under base unit 100₄, slave unit 100₇ is under slave unit 100₅, and slave unit 100₆ is not recognized, which is a second topology. In such a case, the service person can be called. For example, the service person can perform a support such as fixing the topology by fixing the slave unit or replacing the device that has signs of a failure. Alternatively, in a case where the topology is largely changed, such as changing to the first topology, the second topology, the first topology, the second topology, or the like within a certain period, the service person can be called.

### <Operation of Remote Monitoring System>

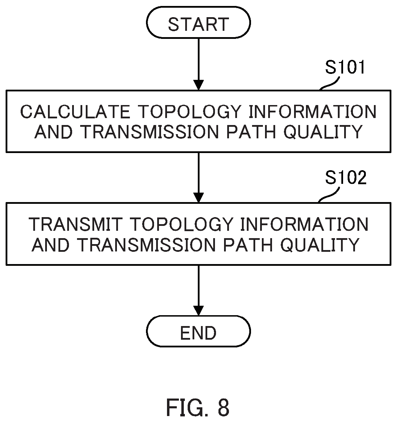

Hereinafter, an operation example of remote monitoring system 1 will be described with reference to FIGS. 8 to 15.

FIG. 8 is a flowchart illustrating an operation example of terminal 100 that is a slave unit. The processing illustrated in FIG. 8 may be executed by terminal 100 at intervals of 5 seconds, 30 seconds, 1 minute, or the like.

In step S101, terminal 100 calculates the topology information and the transmission path quality.

In step S102, terminal 100 transmits the calculated topology information and the transmission path quality to terminal 100 that is a base unit. The topology information and the transmission path quality transmitted from terminal 100 positioned lower in a multi-hop network are relayed to terminal 100 positioned higher, and are finally transmitted to terminal 100 that is the base unit. Then, the flow ends.

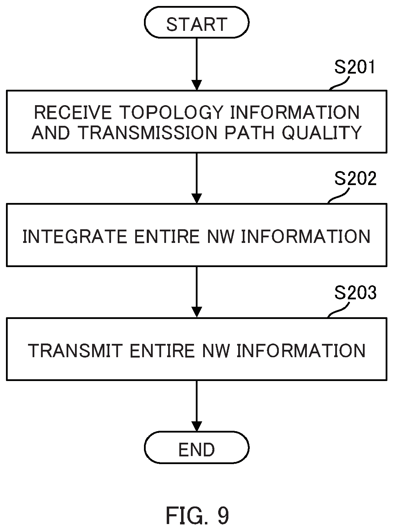

FIG. 9 is a flowchart illustrating an operation example of terminal 100 that is the base unit. The processing illustrated in FIG. 9 may be executed by terminal 100 at intervals of 5 seconds, 30 seconds, 1 minute, or the like.

In step S201, terminal 100 receives the topology information and the transmission path quality from terminal 100 that is a slave unit. The topology information and the transmission path quality are received from all the slave units included in terminal network 10.

In step S202, terminal 100 integrates all the topology information and the transmission path quality (NW information) received from all the slave units.

In step S203, terminal 100 transmits all the integrated NW information to management server 20. Then, the flow ends.

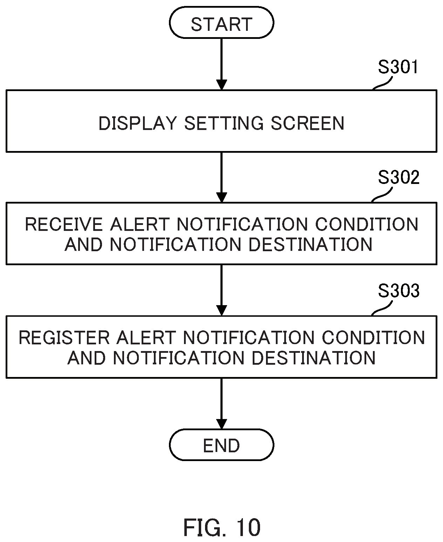

FIG. 10 is a flowchart illustrating an operation example of management server 20. The processing illustrated in FIG. 10 relates to the alert-related information.

In step S301, management server 20 transmits the information on the statistical information of the NW information and the alert notification condition to administrator device 30 to display a setting screen related to the alert notification condition on the display of administrator device 30.

In step S302, management server 20 receives the alert notification condition and the notification destination from administrator device 30 in response to the input from the administrator on the setting screen.

In step S303, management server 20 stores the received alert notification condition and the notification destination in storage apparatus 402, thereby registering the received alert notification condition and the notification destination. Then, the flow ends.

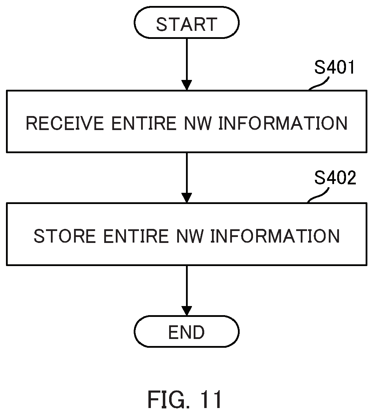

FIG. 11 is a flowchart illustrating an operation example of management server 20. The processing illustrated in FIG. 11 relates to the NW information.

In step S401, management server 20 receives all the NW information from terminal 100 that is the base unit.

In step S402, management server 20 stores all the received NW information in storage apparatus 402. Then, the flow ends.

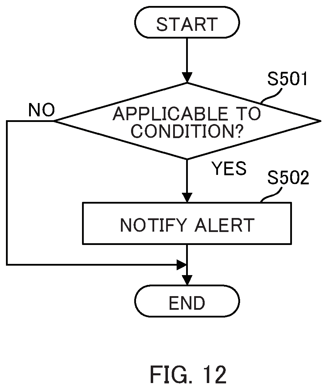

FIG. 12 is a flowchart illustrating an operation example of management server 20. The processing illustrated in FIG. 12 relates to the alert notification.

In step S501, management server 20 determines whether the NW information of terminal 100 is applicable to the alert notification condition.

In a case where it is not applicable to the alert notification condition (step S501; NO), the flow ends.

Meanwhile, in a case where it is applicable to the alert notification condition (step S501; YES), in step S502, management server 20 notifies the alert. Then, the flow ends.

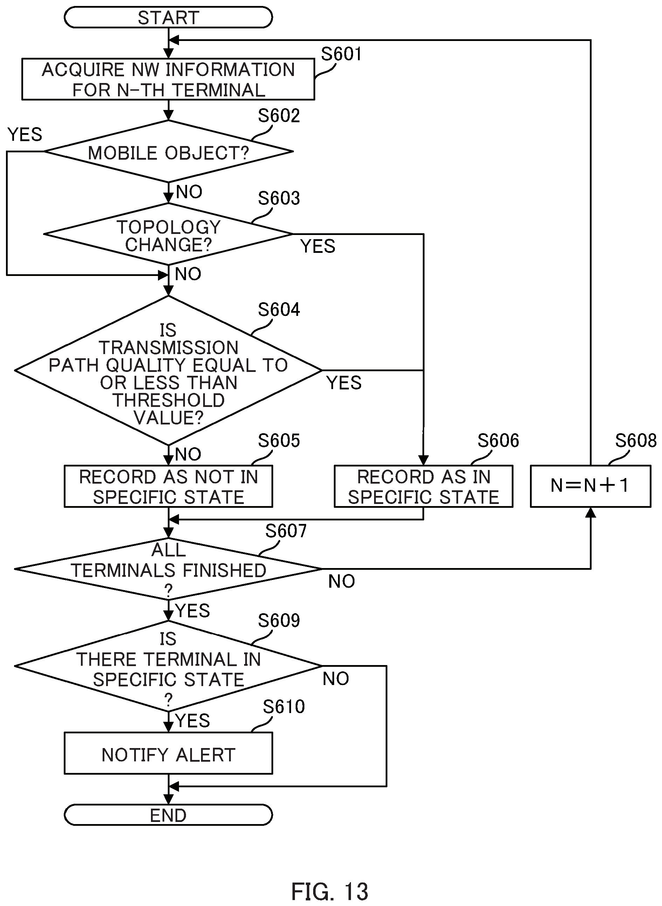

FIG. 13 is a flowchart illustrating an operation example of management server 20. The processing illustrated in FIG. 13 relates to the alert notification in which the processing illustrated in FIG. 12 in which the alert notification determination is performed for the transmission path quality and the topology change is made more specific. In the example illustrated in FIG. 12, the alert notification determination based on the topology change is preferentially performed. It is assumed that N = 1 is set before the processing illustrated in FIG. 11 starts.

In step S601, management server 20 acquires the latest NW information of the N-th terminal 100 from, for example, the table illustrated in FIG. 15.

In step S602, management server 20 determines whether the N-th terminal is a mobile object based on the NW information (e.g., the "terminal type" field of the table illustrated in FIG. 15).

In a case where the terminal is a mobile object (step S602; YES), the flow proceeds to step S604.

Meanwhile, in a case where the terminal is not a mobile object (step S602; NO), in step S603, it is determined whether the topology change set as the alert notification condition has occurred, based on the NW information.

In a case where the topology change has occurred (step S603; YES), in step S606, management server 20 records that the N-th terminal 100 is in a specific state, and the flow proceeds to step S607.

Meanwhile, in a case where the topology change has not occurred (step S603; NO), in step S604, management server 20 determines whether the transmission path quality is equal to or less than the threshold value set as the alert notification condition, based on the NW information.

In a case where the transmission path quality is equal to or less than the threshold value (step S604; YES), in step S606, management server 20 records that the N-th terminal 100 is in a specific state, and the flow proceeds to step S607.

Meanwhile, in a case where the transmission path quality is not equal to or less than the threshold value (step S604; NO), in step S605, management server 20 records that the N-th terminal 100 is not in the specific state, and the flow proceeds to step S607.

In step S607, management server 20 determines whether the alert notification determination for all terminals 100 is ended.

In a case where the alert notification determination for all terminals 100 is not ended (step S607; NO), in step S608, management server 20 determines to set N = N + 1 (to perform the alert notification determination for the (N + 1)-th terminal 100). Then, the flow returns to step S601.

In a case where the alert notification determination for all terminals 100 is ended (step S607; YES), in step S609, management server 20 determines whether there is terminal 100 recorded as being in the specific state.

In a case where there is no terminal 100 recorded as being in the specific state (step S609; NO), management server 20 ends the flow without notifying the alert.

Meanwhile, in a case where there is terminal 100 recorded as being in the specific state (step S609; YES), in step S610, management server 20 notifies the alert notification destination of the alert indicating the content of the alert notification condition (transmits the alert by e-mail).

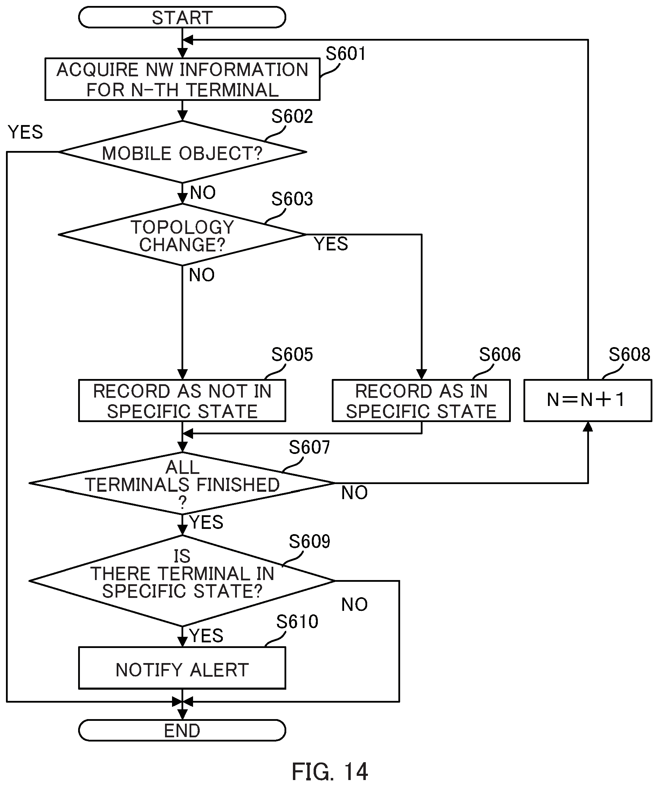

FIG. 14 is a flowchart illustrating an operation example of management server 20. The processing illustrated in FIG. 14 relates to the alert notification in which the processing illustrated in FIG. 12 in which the alert notification determination is performed for a topology change is made more specific. Since the processing illustrated in FIG. 14 is merely that step S604 is removed from the processing illustrated in FIG. 13 and one of the branches of step S602 proceeds to the processing end, the description thereof will be omitted.

The administrator who has received the alert notification can perform a setting of lowering the threshold value of the transmission path quality (e.g., physical speed) and/or a setting of fixing the topology (e.g., changing the apparatus type illustrated in FIG. 15 from "mobile object" to "stationary") on various setting screens displayed on the display of administrator device 30 in response to the alert notification (step S610) illustrated in FIGS. 13 and 14. As a result, it is possible to avoid frequent notification of an alert. Alternatively, on the contrary, it is possible to notify the alert more frequently by performing a setting of increasing the threshold value of the transmission path quality or the like.

### <Variation>

The examples of the alert notification determination are not limited to the examples illustrated in FIGS. 13 and 14. For example, in the processing illustrated in FIG. 13, the alert notification determination based on a topology change may not be performed, and only the alert notification determination based on a transmission path quality may be performed. That is, in the processing illustrated in FIG. 13, step S603 may be removed. Further, in the processing illustrated in FIG. 13, the alert notification determination based on a transmission path quality may be preferentially performed. That is, step S603 and step S604 may be interchanged. Further, in the processing illustrated in FIG. 13, both the alert notification determination based on a topology change and the alert notification determination based on a transmission path quality may be performed, and in a case where it is determined to notify the alert in both the alert notification determinations, it may be recorded that terminal 100 is in the specific state.

Although the example has been described in which alert-related information acquirer 502 described above acquires both topology information and a transmission path quality as the NW information, but only one of the topology information and the transmission path quality may be acquired.

Further, the communication system according to the embodiment described above is not limited to a multi-hop communication system and may be another communication system including a plurality of terminals 100.

Further, in the embodiment described above, the functional units of CPU 201 and CPU 401 may be appropriately integrated with another functional unit or may be divided into two or more sub-functional units.

Further, in the embodiment described above, the order of the steps illustrated in the flowchart or the like is not limited to the illustrated order.

According to the embodiment described above, management server 20 acquires topology information including the information indicating connection destination terminal 100 of terminal 100 constituting terminal network 10 and acquires an alert notification condition, which is a condition for notifying the alert indicating that terminal 100 or terminal network 10 is in a specific state, and an alert notification destination, which is the notification destination of the alert. Further, management server 20 determines whether the topology information is applicable to the alert notification condition, and in a case where the topology information is applicable to the alert notification condition, management server 20 transmits the alert to the alert notification destination. As described above, it is possible to appropriately specify and notify that terminal 100 or terminal network 10 is in a specific state based on the topology information including the information indicating connection destination terminal 100 of terminal 100.

### <Summary of Embodiment>

An information processing apparatus according to one exemplary embodiment of the present disclosure includes: a first acquirer that acquires topology information including information indicating a connection destination communication apparatus of a communication apparatus constituting a network; a second acquirer that acquires a condition for notifying an alert indicating that the communication apparatus or the network is in a specific state, and a notification destination of the alert; a determiner that determines whether the topology information is applicable to the condition; and a notifier that transmits the alert to the notification destination when the topology information is applicable to the condition.

In this information processing apparatus, the condition is that a new communication apparatus joins the network or that a communication apparatus leaves the network.

In this information processing apparatus, the condition is that the communication apparatus connects to a specific communication apparatus in the network.

In this information processing apparatus, the first acquirer further acquires transmission path quality of a transmission path in which the communication apparatus performs communication; the determiner determines, when the topology information is not applicable to the condition, whether the transmission path quality is applicable to the condition; and the notifier that transmits the alert to the notification destination, when the transmission path quality is applicable to the condition.

This information processing apparatus further includes: a display controller that causes a display of a device associated with an administrator of the network to display information regarding the condition together with the topology information and statistical information of the transmission path quality.

In this information processing apparatus, the condition is that the transmission path quality is equal to or less than a threshold value.

In this information processing apparatus, the transmission path quality is a physical speed of the transmission path.

In this information processing apparatus, the condition is that the transmission path quality is not within a predetermined range.

An alert notification method according to one exemplary embodiment of the present disclosure includes: acquiring, by an information processing apparatus, topology information including information indicating a connection destination communication apparatus of a communication apparatus constituting a network; acquiring, by the information processing apparatus, a condition for notifying an alert indicating that the communication apparatus or the network is in a specific state, and a notification destination of the alert; determining, by the information processing apparatus, whether the topology information is applicable to the condition; and transmitting, by the information processing apparatus, the alert to the notification destination, when the topology information is applicable to the condition.

In the embodiments described above, the notation "... processor", "... -er", "... -or" or "... -ar" used for each component may be replaced with another notation such as "... circuitry", "... assembly", "... device", "... unit" or "... module".

Although the embodiments have been described above with reference to the accompanying drawings, the present disclosure is not limited to such examples. It is obvious that a person skilled in the art can arrive at various variations and modifications within the scope described in the claims. It is understood that such variations and modifications also belong to the technical scope of the present disclosure. Further, components in the embodiments described above may be optionally combined without departing from the spirit of the present disclosure.

The present disclosure can be realized by software, hardware, or software in cooperation with hardware. Each functional block used in the description of each embodiment described above can be partly or entirely realized by an LSI such as an integrated circuit, and each process described in the embodiment may be controlled partly or entirely by the same LSI or a combination of LSIs. The LSI may be individually formed as chips, or one chip may be formed so as to include part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. Further, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may include and/or function as a receiver and a transmitter. The transceiver, as the transmitter and receiver, may include a radio frequency (RF) module including amplifiers, RF modulators/demodulators and the like, and one or more antennas. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote healthcare and medicine prescription) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may include a device such as a controller or a sensor which is coupled to a communication device performing communication functions described in the present disclosure. For example, the communication apparatus may include a controller or a sensor that generates control signals or data signals which are used by a communication device performing communication functions of the communication apparatus.

The communication apparatus also may include an infrastructure facility, such as a base station, an access point, and any other apparatus, device or system that communicates with or controls various apparatuses such as those in the above non-limiting examples.

The disclosed contents of the specification, the drawings, and the abstract included in Japanese Patent Application No. 2023-119091 filed on July 21, 2023 are entirely incorporated in the present application by reference.

### Industrial Applicability

One exemplary embodiment of the present disclosure is useful for communication systems each including a plurality of terminals.

### Reference Signs List

- 1: Remote monitoring system
- 10: Terminal network
- 100: Terminal
- 201: CPU
- 202: Storage apparatus
- 203: Communication apparatus
- 204: Equipment interface apparatus
- 301: Packet analyzer
- 302: Authentication processor
- 303: Transmission path estimator
- 304: Topology manager
- 305: NW information communication controller
- 306: Packet generator
- 20: Management server
- 401: CPU
- 402: Storage apparatus
- 403: Communication apparatus
- 404: UI apparatus
- 501: Alert-related information display controller
- 502: Alert-related information acquirer
- 503: Alert notification determiner
- 504: Alert notifier

## Claims

1. An information processing apparatus, comprising:
a first acquirer that acquires topology information including information indicating a connection destination communication apparatus of a communication apparatus constituting a network;
a second acquirer that acquires a condition for notifying an alert indicating that the communication apparatus or the network is in a specific state, and a notification destination of the alert;
a determiner that determines whether the topology information is applicable to the condition; and
a notifier that transmits the alert to the notification destination when the topology information is applicable to the condition.

2. The information processing apparatus according to claim 1, wherein, the condition is that a new communication apparatus joins the network or that a communication apparatus leaves the network.

3. The information processing apparatus according to claim 1, wherein, the condition is that the communication apparatus connects to a specific communication apparatus in the network.

4. The information processing apparatus according to claim 1, wherein,
the first acquirer further acquires transmission path quality of a transmission path in which the communication apparatus performs communication;
the determiner determines, when the topology information is not applicable to the condition, whether the transmission path quality is applicable to the condition; and
the notifier that transmits the alert to the notification destination, when the transmission path quality is applicable to the condition.

5. The information processing apparatus according to claim 4, further comprising: a display controller that causes a display of a device associated with an administrator of the network to display information regarding the condition together with the topology information and statistical information of the transmission path quality.

6. The information processing apparatus according to claim 4, wherein, the condition is that the transmission path quality is equal to or less than a threshold value.

7. The information processing apparatus according to claim 6, wherein, the transmission path quality is a physical speed of the transmission path.

8. The information processing apparatus according to claim 4, wherein, the condition is that the transmission path quality is not within a predetermined range.

9. An alert notification method, comprising:
acquiring, by an information processing apparatus, topology information including information indicating a connection destination communication apparatus of a communication apparatus constituting a network;
acquiring, by the information processing apparatus, a condition for notifying an alert indicating that the communication apparatus or the network is in a specific state, and a notification destination of the alert;
determining, by the information processing apparatus, whether the topology information is applicable to the condition; and
transmitting, by the information processing apparatus, the alert to the notification destination, when the topology information is applicable to the condition.
